# EUROPEAN PATENT APPLICATION

(11) **EP 4 823 105 A1**
(43) Date of publication of application: **14.10.2026**
(21) Application number: 24915791.8
(22) Date of filing: 08.10.2024
(51) Int. Cl.: H04N 23/60, H04N 23/54, H04N 23/57

(54) **ELECTRONIC DEVICE COMPRISING CAMERA DEVICE AND OPERATION METHOD THEREFOR**

(30) Priority: 03.01.2024 KR 20240000941; 21.02.2024 KR 20240025194
(71) Applicant: Samsung Electronics Co., Ltd., Suwon-si, Gyeonggi-do 16677 (KR)
(72) Inventor: KIM, Bosung, Suwon-si Gyeonggi-do 16677 (KR); YOON, Haena, Suwon-si Gyeonggi-do 16677 (KR); LEE, Youngjun, Suwon-si Gyeonggi-do 16677 (KR); CHOI, Byounggeun, Suwon-si Gyeonggi-do 16677 (KR); CHOI, Eunah, Suwon-si Gyeonggi-do 16677 (KR)
(74) Representative: Nederlandsch Octrooibureau
(86) International application number: PCT/KR2024/015294
(87) International publication number: WO 2025/146902

(57) **Abstract**

An electronic device according to one embodiment of the present invention may comprise: a camera device including an image sensor; one or more processors; and memory storing one or more instructions. The one or more instructions may be executed by the one or more processors to instruct the electronic device to acquire a first photographing command. The one or more instructions may be executed by the one or more processors to instruct the electronic device to acquire, from the image sensor, image frames for acquiring an image corresponding to the first photographing command in response to the first photographing command. The one or more instructions may be executed by the one or more processors to instruct the electronic device to switch to a standby state capable of acquiring an image corresponding to a second photographing command on the basis of the acquisition of the image frames. The second photographing command may be subsequent to the first photographing command.

## Description

### [Technical Field]

The disclosure relates to an electronic device including a camera device and an operation method therefor.

### [Background Art]

With the recent development of digital technologies, various kinds of electronic devices such as mobile communication terminals, personal digital assistants (PDAs), electronic schedulers, smartphones, tablet personal computers (PCs), and/or wearable electronic devices are widely used. Hardware and software of electronic devices are being continuously enhanced to support and increase functionalities.

For example, an electronic device may acquire a photographing command in response to a user pressing a photographing button (for example, a shutter button), and may store images acquired from a camera after the user presses the photographing button.

The electronic device may acquire a subsequent photographing command following the photographing command, and may correct an image (for example, a raw image) acquired through the camera after the photographing command. For example, the electronic device may synthesize some of the image frames acquired after the photographing command, and may provide a corrected image to the user.

The above information is presented as related art information only to assist with understanding of the disclosure. No determination or assertion is made as to whether any of the above might be applicable as prior art with regard to the disclosure.

### [Disclosure of Invention]

### [Solution to Problem]

According to an embodiment, an electronic device may include: a camera device including an image sensor; one or more processors; and memory configured to store one or more instructions. The one or more instructions may be individually or collectively executed by the one or more processors to cause the electronic device to acquire a first photographing command. The one or more instructions may be individually or collectively executed by the one or more processors to cause the electronic device to, in response to the first photographing command, acquire image frames for acquiring an image corresponding to the first photographing command from the image sensor. The one or more instructions may be individually or collectively executed by the one or more processors to cause the electronic device to, based on the image frames being acquired, switch to a standby state to be able to acquire an image corresponding to a second photographing command. The second photographing command may be subsequent to the first photographing command.

According to an embodiment, an operation method of an electronic device may include acquiring a first photographing command. The operation method of the electronic device may include, in response to the first photographing command, acquiring image frames for acquiring an image corresponding to the first photographing command from an image sensor. The operation method of the electronic device may include, based on the image frames being acquired, switching to a standby state to be able to acquire an image corresponding to a second photographing command which is subsequent to the first photographing command.

According to an embodiment, a computer-readable non-transitory recording medium may have a computer program recorded thereon to cause an electronic device to, when being executed by the electronic device, acquire a first photographing command. The computer-readable non-transitory recording medium may have the computer program recorded thereon to cause the electronic device to, when being executed by the electronic device, in response to the first photographing command, acquire image frames for acquiring an image corresponding to the first photographing command from an image sensor. The computer-readable non-transitory recording medium may be set to cause the electronic device to, when being executed by the electronic device, based on the image frames being acquired, switch to a standby state to be able to acquire an image corresponding to a second photographing command which is subsequent to the first photographing command.

### [Brief Description of Drawings]

FIG. 1 is a block diagram of an electronic device in a network environment according to various embodiments.
FIG. 2 is a block diagram illustrating a camera device according to various embodiments.
FIG. 3 is a view to explain an operation of switching to a standby state to be able to acquire an image corresponding a next photographing command following a photographing command according to an embodiment.
FIG. 4 is a view to explain a point of time at which an electronic device switches to a standby state according to an embodiment.
FIG. 5 is a flowchart illustrating a process of an operation of switching to a standby state for a next photographing command following a photographing command according to an embodiment.
FIG. 6 is a view to explain an operation of switching to a standby state with time according to an embodiment.
FIG. 7 is a concept view to explain an operation of acquiring an image in response to a photographing command, and an operation of switching to a standby state for a next photographing command according to an embodiment.
FIG. 8 is a flowchart illustrating a processor related to an example of an operation of switching to a standby state according to an embodiment.
FIG. 9 is a view to explain a case in which a control signal for switching a standby state is included in a signal related to completion of image processing for image frames according to an embodiment.

### [Mode for the Invention]

Hereinafter, various embodiments of the disclosure will be described in detail with reference to the accompanying drawings so that a person skilled in the art can easily embody. However, the disclosure may be implemented in different forms and is not limited to the embodiments set forth herein.

Camera devices included in electronic devices may have a problem that, before image processing for image frames for acquiring an image corresponding to a photographing command is completed, a subsequent photographing command is disregarded even when the subsequent photographing command is acquired.

In an embodiment, there are provided an electronic device and an operation method therefor, which are capable of acquiring an image corresponding to a subsequent photographing command acquired even before image processing for image frames for acquiring an image corresponding to a photographing command is completed. For example, there are provided an electronic device and an operation method therefor, which switch to a standby state to be able to acquire an image corresponding to a next photographing command, based on acquisition of image frames for acquiring an image corresponding to a previous photographing command, so that the time to process the subsequent photographing command is accelerated.

The technical objects to be achieved by the disclosure are not limited to those mentioned above, and other technical objects that are not mentioned above may be clearly understood to those skilled in the art based on the descriptions of the disclosure.

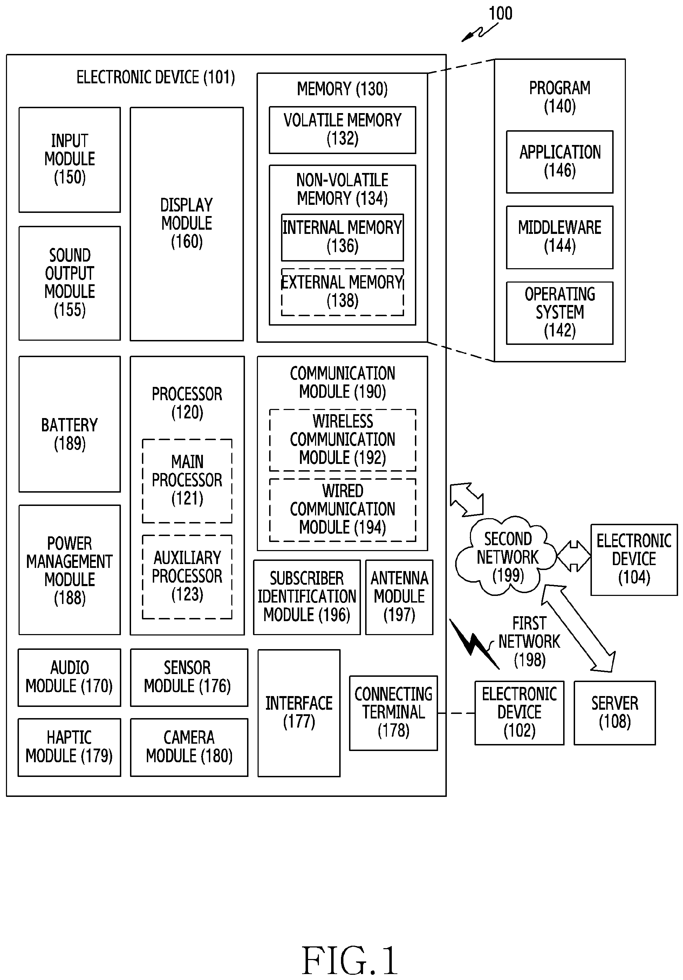

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

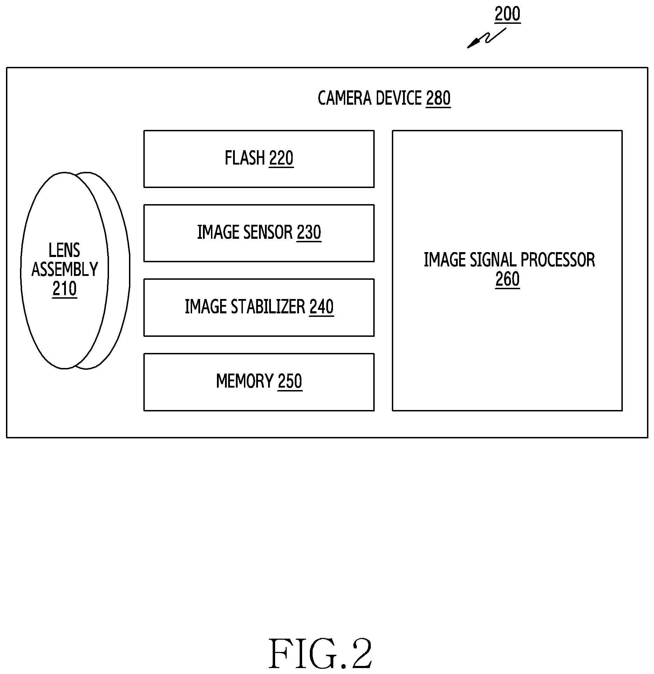

FIG. 2 is a block diagram 200 illustrating a camera device 280 (for example, the camera module 180 of FIG. 1) according to various embodiments. Referring to FIG. 2, the camera device 280 may include a lens assembly 210, a flash 220, an image sensor 230, an image stabilizer 240, a memory 250 (for example, a buffer memory), or an image signal processor 260. The lens assembly 210 may collect light emitted from a subject which is a target for image capturing. The lens assembly 210 may include one or more lenses. According to an embodiment, the camera device 280 may include a plurality of lens assemblies 210. In this case, the camera device 280 may configure, for example, a dual camera, a 360-degree camera, or a spherical camera. Some of the plurality of lens assemblies 210 may have the same lens attribute (for example, an angle of view, a focal distance, auto-focusing, an f number, or optical zoom), or at least one lens assembly may have one or more lens attributes different from lens attributes of the other lens assemblies. The lens assembly 210 may include, for example, a wide-angle lens and a telephoto lens.

The flash 220 may emit light to be used to strengthen light discharged or reflected from a subject. According to an embodiment, the flash 220 may include one or more light emitting diodes (LEDs) (for example, red-green-blue (RGB) LED, white LED, infrared LED, or ultraviolet LED) or a xenon lamp. The image sensor 230 may acquire an image corresponding to a subject by converting light discharged or reflected from the subject and transmitted through the lens assembly 210 into an electrical signal. According to an embodiment, the image sensor 230 may include one image sensor selected from image sensors having different attributes, such as an RGB sensor, a black and white (BW) sensor, an IR sensor, or a UV sensor, a plurality of image sensors having the same attribute, or a plurality of image sensors having different attributes. Each of the image sensors included in the image sensor 230 may be implemented by using a charged coupled device (CCD) sensor or a complementary metal oxide semiconductor (CMOS) sensor, for example.

The image stabilizer 240 may move at least one lens included in the lens assembly 210, or the image sensor 230 in a specific direction or may control operation characteristics of the image sensor 230 (for example, adjust a read-out timing), in response to a movement of the camera device 280 or the electronic device 101 including the same. This may compensate for at least a part of negative effects caused by movements on a captured image. According to an embodiment, the image stabilizer 240 may detect such movement of the camera device 280 or the electronic device 101 by using a gyro sensor (not shown) or an acceleration sensor (not shown) disposed inside or outside the camera device 280. According to an embodiment, the image stabilizer 240 may be implemented by an optical image stabilizer, for example. The memory 250 may at least temporarily store at least a part of the image obtained through the image sensor 230 for next image processing operations. For example, when image acquisition is delayed due to a shutter or a plurality of images are obtained at high speed, the obtained original image (for example, a Bayer-patterned image or a high-resolution image) may be stored in the memory 250, and a copy image corresponding thereto (for example, a low-resolution image) may be previewed through the display module 160. Thereafter, when a designated condition is satisfied (for example, a user input or a system command), at least a part of the original image stored in the memory 250 may be obtained and processed by the image signal processor 260. According to an embodiment, the memory 250 may be configured as at least a part of the memory 130 or a separate memory operated independently therefrom.

The image signal processor 260 may perform one or more image processing operations with respect to an image obtained through the image sensor 230 or an image stored in the memory 250. The one or more image processing operations may include, for example, depth map generation, 3D modeling, panorama generation, feature point extraction, image synthesis, or image compensation (for example, noise reduction, resolution adjustment, brightness adjustment, blurring, sharpening or softening). Additionally or alternatively, the image signal processor 260 may control (for example, control of an exposure time, control of a read-out timing) at least one (for example, the image sensor 230) of the components included in the camera device 280. The image processed by the image signal processor 260 may be stored again in the memory 250 or may be provided to an external component of the camera device 280 (for example, the memory 230, the display module 160, the electronic device 102, the electronic device 104, or the server 108) for additional processing. According to an embodiment, the image signal processor 260 may be configured as at least a part of the processor 120 or a separate processor operated independently from the processor 120. When the image signal processor 260 is configured as a separate processor from the processor 120, at least one image processed by the image signal processor 260 may be displayed by the processor 120 as it is, or may be displayed through the display module 160 after undergoing additional image processing.

According to an embodiment, the electronic device 101 may include a plurality of camera devices 280 having different attributes or functions. In this case, at least one of the plurality of camera device 280 may be a wide angle camera, and at least one other camera device may be a telephoto camera. Similarity, at least one of the plurality of camera devices 280 may be a front-facing camera, and at least one other camera device may be a rear-facing camera.

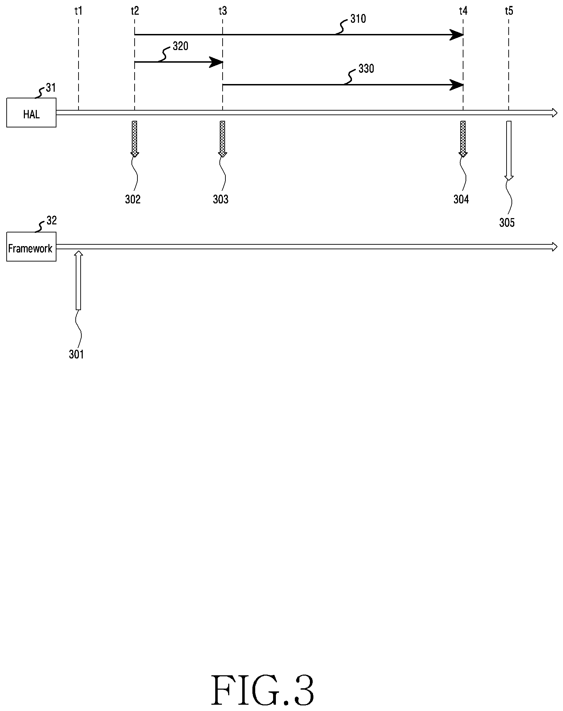

FIG. 3 is a view to explain an operation of switching to a standby state to be able to acquire an image corresponding to a next photographing command following a photographing command according to an embodiment.

According to an embodiment, an electronic device (for example, the electronic device 101 of FIG. 1) may include a camera device (for example, the camera device 280 of FIG. 2) including an image sensor (for example, the image sensor 230 of FIG. 2), one or more processors, and memory to store one or more instructions. However, the configuration of the electronic device is not limited hereto. For example, the electronic device may include an application layer (not shown), a framework 32, and/or a hardware abstraction layer 31. In an example, operations of the application layer, the framework 32 and/or the hardware abstraction layer 31 may be performed through one or more processors. In an example, operations of the application layer, the framework 32 and/or the hardware abstraction layer 31 may be understood as being performed by one or more processors (for example, the processor 120 of FIG. 1) by computing or controlling components of the electronic device by executing instructions stored in memory (for example, the memory 130 of FIG. 1).

According to an embodiment, the electronic device may acquire a photographing command 301 using a user input. For example, the electronic device may acquire a plurality of photographing commands. For example, the electronic device may acquire a first photographing command 301 and a second photographing command (not shown) following the first photographing command 301. According to an embodiment, the electronic device may acquire a photographing command by a user pressing a photographing button (for example, a shutter button within the electronic device or a shutter button within an external electronic device connected with the electronic device). Referring to FIG. 3, the electronic device may acquire the first photographing command 301 at a first point of time t1. In an example, the photographing command 301 may include a capture command.

According to an embodiment, the electronic device may transmit a photographing request signal 302 in response to the photographing command. For example, in response to a photographing command being acquired from at least one of the application layer or the framework 32, the hardware abstraction layer 31 may transmit a photographing start signal 302 to at least one of the application layer or the framework 32. Referring to FIG. 3, the hardware abstraction layer 31 may transmit the photographing start signal 302 related to the first photographing command 301 to at least one of the application layer or the framework at a second point of time t2. The electronic device may perform an operation for acquiring an image corresponding to a photographing command, based on the photographing start signal 302. For example, the electronic device may perform an operation for acquiring an image corresponding to the first photographing command 301, based on the photographing start signal 302 related to the first photographing command 301.

According to an embodiment, the electronic device may perform an operation for acquiring an image corresponding to a photographing command (for example, the first photographing command 301). For example, the electronic device may acquire image frames for acquiring an image corresponding to a photographing command. For example, the electronic device may acquire image frames from an image sensor (for example, the image sensor 230 of FIG. 2). The electronic device may acquire a plurality of image frames or may acquire a single image frame. Referring to FIG. 3, the electronic device may acquire image frames for acquiring the image corresponding to the first photographing command 301 between the second point of time t2 and a third point of time t3.

According to an embodiment, based on acquisition of image frames, the electronic device may switch to a state to be able to perform an operation for acquiring an image corresponding to a next photographing command following a photographing command. For example, based on acquisition of the image frames for acquiring the image corresponding to the first photographing command 301, the electronic device may switch to a standby state to be able to acquire an image corresponding to a second photographing command. The second photographing command may be subsequent to the first photographing command. Referring to FIG. 3, the electronic device may switch to the standby state at the third point of time t3.

According to an embodiment, based on acquisition of image frames, the electronic device may switch to a state to be able to perform an operation for acquiring an image corresponding to a next photographing command following a photographing command. For example, the electronic device may perform image processing with respect to the acquired image frames. For example, referring to FIG. 3, the electronic device may perform image processing with respect to the image frames for acquiring the image corresponding to the first photographing command 301 between the third point of time t3 and a fourth point of time t4.

According to an embodiment, the electronic device may transmit an image processing completion signal 304 based on completion of the image processing for the image frames. For example, the hardware abstraction layer 31 may transmit the image processing completion signal 304 to at least one of the application layer or the framework 32. For example, the hardware abstraction layer 31 may transmit the image processing completion signal 304 to the framework 32. The framework 32 may transmit an image acquisition completion signal which is based on the image processing completion signal 304 to the application layer. Referring to FIG. 3, the hardware abstraction layer 31 may transmit the image processing completion signal 304 related to the first photographing command 301 to the framework 32 at the fourth point of time t4.

According to an embodiment, the electronic device may transmit a photographing completion signal 305, based on the image processing completion signal 304. For example, the hardware abstraction layer 31 may transmit the photographing completion signal 305 to at least one of the application layer or the framework 32. Referring to FIG. 3, the hardware abstraction layer 31 may transmit the photographing completion signal 305 related to the first photographing command 301 to the framework 32 at a fifth point of time t5.

According to an embodiment, the electronic device may acquire an image corresponding to a photographing command, based on the image processing completion signal 304. For example, the electronic device may acquire the image corresponding to the first photographing command 301, based on the image processing completion signal 304 related to the first photographing command 301. According to an embodiment, the electronic device may output the acquired image through a display (for example, the display module 160 of FIG. 1). According to an embodiment, the electronic device may store the acquired image in memory. For example, the electronic device may store the acquired image in a buffer memory region.

According to an embodiment, the electronic device may transmit a signal 303 for switching to the standby state. For example, the hardware abstraction layer 31 may transmit the signal 303 for switching to the standby state to at least one of the application layer or the framework 32. The electronic device may switch to the standby state based on the signal 303. Referring to FIG. 3, the electronic device may transmit the signal 303 for switching to the standby state at the third point of time t3.

According to an embodiment, as the electronic device switches to the standby state, the electronic device may perform the operation for acquiring an image corresponding a next photographing command following a photographing command. For example, the electronic device may perform the operation for acquiring an image corresponding to the second photographing command following the first photographing command 301. For example, the electronic device may acquire image frames for acquiring the image corresponding to the second photographing command. The electronic device may perform image processing with respect to the acquired image frames. For example, the electronic device may perform image processing with respect to the image frames for acquiring the image corresponding to the second photographing command. Regarding the operation for acquiring the image corresponding the second photographing command, references are made to the operation for acquiring the image corresponding to the first photographing command described above.

According to an embodiment, when the electronic device does not switch to the standby state, the operation for acquiring an image corresponding to a subsequent photographing command may be executed after the image processing completion signal 304 is transmitted. For example, referring to FIG. 3, the operation for the second photographing command following the first photographing command 301 may be executed after the fourth point of time t4. For example, when the electronic device does not switch to the standby state, a subsequent photographing command acquired before image processing for a previous photographing command is completed may be disregarded. For example, the second photographing command acquired before the fourth point of time t4 may be disregarded. Accordingly, when the electronic device does not switch to the standby state, the time required to execute the operation for a subsequent photographing command (for example, the second photographing command) may be a first time 310.

According to an embodiment, as the electronic device switches to the standby state, the point of time at which the operation for acquiring an image corresponding to a subsequent photographing command is executed may be accelerated. For example, when the electronic device switches to the standby state, the operation for acquiring an image corresponding to a subsequent photographing command may be executed after the point of time at which the electronic device switches to the standby state. For example, the operation for acquiring an image corresponding to a subsequent photographing command may be executed after the signal 303 for switching to the standby state is transmitted. For example, referring to FIG. 3, the operation for the second photographing command following the first photographing command 301 may be executed after the third point of time t3. When the electronic device switches to the standby state, the time required to execute the operation for the subsequent photographing command (for example, the second photographing command) may be a second time 320. Accordingly, the time required to execute the operation for the subsequent photographing command when the electronic device switches to the standby state may be a third time 330 faster than when the electronic device does not switch to the standby state.

According to an embodiment, operations for acquiring images corresponding to respective photographing commands may be independently performed. For example, the operation for acquiring the image corresponding to the first photographing command may be performed separately from the operation for acquiring the image corresponding to the second photographing command. For example, the operation for acquiring an image corresponding to each photographing command may be managed with a separate primary key. However, this should not be considered as limiting. The electronic device may control the operations for acquiring images corresponding to respective photographing commands to be performed independently, such that a phenomenon caused by the reverse of the order in processing the operations for acquiring images corresponding to respective photographing commands may be solved.

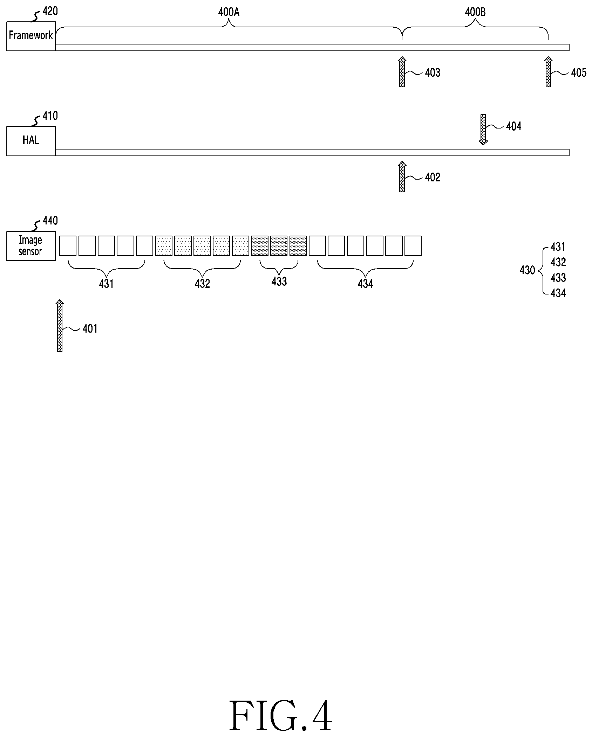

FIG. 4 is a view to explain a point of time at which an electronic device switches to a standby state according to an embodiment.

Regarding the contents of FIG. 4, references may be made to the contents of at least one of the other drawings. For example, regarding the contents of FIG. 4, references may be made to the contents of FIGS. 1, 2, and/or 3 described above.

According to an embodiment, the electronic device may acquire a first photographing command 401. In response to acquisition of the first photographing command 401, the electronic device may perform an operation 400A of acquiring image frames 430, and an image processing operation 400B for the acquired image frames 430.

According to an embodiment, the electronic device may perform the operation 400A for acquiring the image frames 430. For example, the electronic device may acquire the image frames 430 for acquiring an image corresponding to the first photographing command 401. For example, the electronic device may acquire the image frames 430 for acquiring the image corresponding the first photographing command 401 from an image sensor 440. According to an embodiment, the image frames 430 may be determined from a plurality of image frames acquired from the image sensor 440 as a camera device (for example, the camera device 280 of FIG. 2) is activated. For example, the image frames 430 may be determined based on the first photographing command 401.

According to an embodiment, the image frames 430 may include a first frame group 431, a second frame group 432, a third frame group 433, and a fourth frame group 434. However, this should not be considered as limiting. For example, the image frames 430 may omit at least one frame group of the above-described frame groups or may further include at least one frame group. In an example, each frame group may omit at least one of the image frames of the frame groups shown in FIG. 4, or may further include at least one image frame. In an example, the frame groups included in the image frames 430 and/or image frames of the frame groups may be variable according to a photographing sequence. According to an embodiment, the number of image frames 430 may be determined at a point of time at which the first photographing command 401 is acquired. For example, the number of image frames 430 may be determined based on the first photographing command 401 at the point of time at which the first photographing command 401 is acquired. For example, the number of image frames 430 may be determined based on a photographing environment for the first photographing command 401.

According to an embodiment, completing the acquisition of the image frames 430 based on the first photographing command 401 may include acquiring the number of image frames determined based on the first photographing command 401. For example, a point of time at which the acquisition of the image frames 430 is completed may include a point of time at which the number of image frames 430 determined based on the first photographing command 401 are acquired.

According to an embodiment, based on the image frames 430 being acquired based on the first photographing command 401 (400A), the electronic device may switch to a standby state to be able to perform an operation related to a second photographing command following the first photographing command 401. For example, the electronic device may switch to the standby state to be able to acquire an image corresponding to the second photographing command. For example, in response to the acquisition of the image frames 430 being completed (402), the electronic device may transmit a first control signal 403 for switching to the standby state from a hardware abstraction layer 410 to a framework 420. The electronic device may control to transmit a second control signal which is based on the first control signal 403 from the framework 420 to an application layer. The electronic device may switch to the standby state based on the first control signal 403 and/or the second control signal. The electronic device may perform an operation for acquiring an image corresponding to an acquired photographing command in response to a photographing command (for example, the second photographing command) acquired after the electronic device switches to the standby state.

According to an embodiment, the electronic device may perform the image processing operation 400B with respect to the acquired image frames. For example, the electronic device may perform image processing with respect to at least some of the image frames 430, based on the image frames 430 being acquired based on the first photographing command 401. For example, the electronic device may perform image processing with respect to the second frame group 432 and the third frame group 433.

According to an embodiment, the electronic device may acquire an image corresponding to the first photographing command 401 by performing image processing with respect to at least some of the image frames 430. For example, the electronic device may collect at least some of the image frames 430 and may synthesize the image frames (404). For example, in response to the first photographing command 401, the electronic device may collect and synthesize the second frame group 432 and the third frame group 433 (404). Accordingly, in response to the first photographing command 401, an image with enhanced quality based on at least some of the image frames 430 may be generated. The image with enhanced quality may include an image corresponding to the first photographing command 401.

According to an embodiment, based on the image corresponding to the first photographing command 401 being synthesized (404), the electronic device may transmit an image processing completion signal 405. For example, the hardware abstraction layer 410 may transmit the image processing completion signal 405. For example, the hardware abstraction layer 410 may transmit the image processing completion signal 405 to at least one of the application layer or the framework 420. For example, the hardware abstraction layer 410 may transmit the image processing completion signal 405 to the framework 420. The framework 420 may transmit an image acquisition completion signal which is based on the image processing completion signal 405 to the application layer.

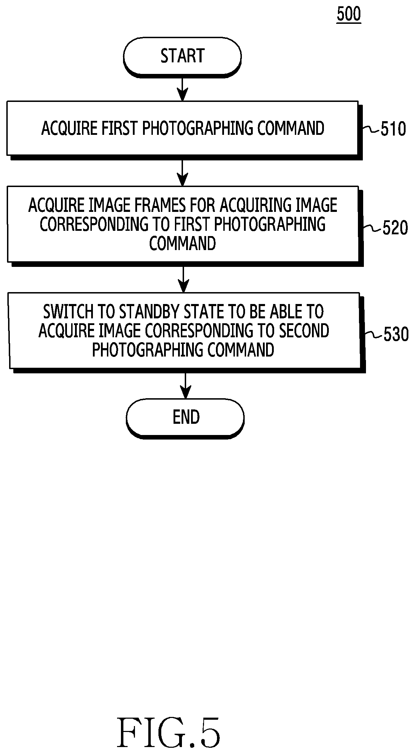

FIG. 5 is a flowchart illustrating a process 500 related to an operation of switching to a standby state for a next photographing command following a photographing command according to an embodiment.

Regarding the contents of FIG. 5, references may be made to the contents of at least one of the other drawings.

In the disclosure, operations of an electronic device may be understood as being performed by one or more processors (for example, the processor 120 of FIG. 1) by computing or controlling components of the electronic device by executing instructions stored in memory (for example, the memory 130 of FIG. 1).

According to an embodiment, an operation method 500 of an electronic device may include an operation 510 of acquiring a first photographing command, an operation 520 of acquiring image frames for acquiring an image corresponding to the first photographing command, and an operation 530 of switching to a standby state to be able to acquire an image corresponding to a second photographing command. However, the operation method of the electronic device is not limited hereto. For example, the operation method of the electronic device may omit at least one of the above-described operations or may further include at least one other operation. For example, the operation method of the electronic device may further include an operation of acquiring image frames for acquiring an image corresponding to the second photographing command in response to the second photographing command being acquired in the standby state, and/or an operation of switching to a standby state to be able to acquire an image corresponding to a third photographing command following the second photographing command.

According to an embodiment, in operation 510, the electronic device may acquire the first photographing command. For example, the electronic device may acquire the first photographing command through a display (for example, the display module 160 of FIG. 1). For example, the electronic device may acquire a photographing command in response to a user touching a visual object (for example, a photographing button) displayed on the display. However, this should not be considered as limiting. According to various embodiments, the photographing command may be acquired through various methods. For example, the electronic device may acquire a photographing command in response to a user touching a physical button. According to an embodiment, the electronic device may display a preview image through the display in response to the photographing command being acquired. For example, the electronic device may display a preview image based on at least some of a plurality of image frames acquired through a camera device (for example, the camera device 280 of FIG. 2).

According to an embodiment, the electronic device may determine a photographing environment in response to the first photographing command being acquired in operation 510. The electronic device may determine the number of image frames for acquiring the image corresponding to the first photographing command based on the first photographing command. For example, the electronic device may determine the number of image frames to be synthesized based on the photographing environment.

According to an embodiment, in operation 520, the electronic device may acquire image frames for acquiring the image corresponding to the first photographing command. For example, the electronic device may acquire a number of image frames determined based on the first photographing command. For example, the electronic device may determine image frames among a plurality of image frames acquired from an image sensor as the camera device is activated, based on the first photographing command. For example, the electronic device may select image frames for acquiring an image corresponding to a first photographing environment from among the plurality of image frames. For example, when the number of image frames to be synthesized is determined as 15 in operation 510, the electronic device may select 15 image frames from among the plurality of image frames stored in memory (for example, the memory 130 of FIG. 1). According to an embodiment, in selecting image frames, the electronic device may select a number of image frames determined according to a Last In, First Out (LIFO) method from among the plurality of image frames stored in the memory. For example, the electronic device may select the image frame that is acquired close to a point of time at which the first photographing command is acquired, first. However, this should not be considered as limiting.

According to an embodiment, in operation 530, the electronic device may switch to the standby state to be able to acquire an image corresponding to the second photographing command, based on the image frames for acquiring the image corresponding to the first photographing command being acquired. The second photographing command may be subsequent to the first photographing command. For example, the second photographing command may include a photographing command that is acquired right after the first photographing command.

According to an embodiment, after operation 530, the electronic device may perform image processing with respect to the image frames acquired based on the first photographing command. For example, the electronic device may generate an image by synthesizing the image frames selected based on the first photographing command. The electronic device may determine the image frames selected in response to the first photographing command as target image frames, and may generate an image by synthesizing the selected image frames. Accordingly, the electronic device may generate an image with enhanced quality.

According to an embodiment, the electronic device may store the generated image. For example, the electronic device may store the image generated through synthesis by performing a software encoder operation for the image. According to an embodiment, the electronic device may output the generated image through the display.

According to an embodiment, when the second photographing command is acquired after operation 530, the electronic device may perform an operation for acquiring the image corresponding to the second photographing command. For example, when the second photographing command is acquired between a first point of time at which the image frames for acquiring the image corresponding to the first photographing command are acquired, and a second point of time at which image processing for the image frames is completed, the electronic device may perform the operation for acquiring the image corresponding to the second photographing command. However, this should not be considered as limiting. For example, when the second photographing command is acquired after the first point of time at which the image frames for acquiring the image corresponding to the first photographing command are acquired, the electronic device may perform the operation for acquiring the image corresponding to the second photographing command.

For example, the electronic device may acquire image frames for acquiring the image corresponding to the second photographing command. The electronic device may switch to a standby state to be able to acquire an image corresponding to a third photographing command, based on the image corresponding to the second photographing command being acquired. The third photographing command may be subsequent to the second photographing command. For example, the third photographing command may include a photographing command that is acquired right after the second photographing command. An operation for a photographing command acquired thereafter may be repeated according to the above-described operations. For example, regarding the operation for acquiring the image corresponding to the second photographing command, references may be made to the operation for acquiring the image corresponding to the first photographing command described above.

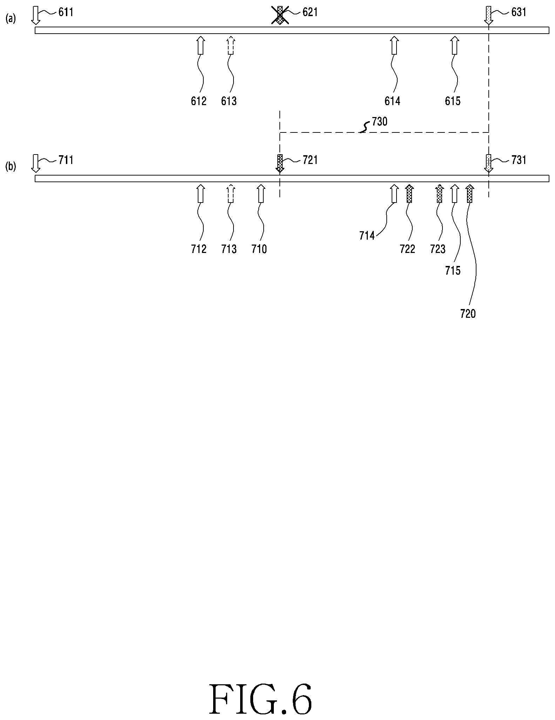

FIG. 6 is a view to explain an operation of switching to a standby state with time according to an embodiment.

FIG. 6(a) is a view illustrating a case in which an electronic device does not switch to a standby state to be able to acquire an image corresponding to a subsequent photographing command, and FIG. 6(b) is a view illustrating a case in which the electronic device switch to the standby state. Regarding the contents of FIGS. 6(a) and 6(b), references may be made to the contents of at least one of the other drawings.

Referring to FIG. 6(a), the electronic device may acquire a first photographing command 611. The electronic device may acquire first image frames for acquiring a first image corresponding to the first photographing command 611 in response to the first photographing command 611. According to an embodiment, the electronic device may transmit a photographing start signal 613 based on acquisition of the first image frames for acquiring the first image. For example, the electronic device may transmit the photographing start signal 613 based on the acquisition of the first image frames for acquiring the first image being completed (612). For example, the electronic device may transmit the photographing start signal 613 to an application. In an example, the photographing start signal 613 may include an audio signal. However, this should not be considered as limiting. In an example, the photographing start signal 613 may be omitted.

According to an embodiment, the electronic device may perform image processing with respect to the first image frames, based on the first image frames for acquiring the first image being acquired. For example, the electronic device may perform image processing with respect to the first image frames in response to the acquisition of the first image frames for acquiring the first image being completed (612). For example, the electronic device may synthesize at least some of the first image frames for acquiring the first image.

According to an embodiment, the electronic device may transmit an image processing completion signal 615 based on the image processing for the first image frames being completed. For example, the electronic device may transmit the image processing completion signal 615 based on the image synthesis for the first image frames being completed (614). For example, the electronic device may transmit the image processing completion signal 615 from a hardware abstraction layer to a framework. The framework may transmit an image acquisition completion signal to an application layer.

According to an embodiment, when the electronic device does not switch to the standby state to be able to acquire an image corresponding to a next photographing command following the first photographing command 611, a next photographing command (for example, a second photographing command 621) that is acquired before the image processing completion signal 615 is transmitted may be disregarded. For example, a next photographing command (for example, the second photographing command 621) that is acquired before the image processing completion signal 615 is transmitted to an application may be disregarded. When the electronic device does not switch to the standby state to be able to acquire an image corresponding to a next photographing command following the first photographing command 611, the electronic device may perform an operation for a next photographing command (for example, a third photographing command 631) that is acquired after the image processing completion signal 615 is transmitted. For example, the electronic device may perform an operation for acquiring an image with respect to a next photographing command (for example, the third photographing command 631) that is acquired after the image processing completion signal 615 is transmitted to an application. For example, the electronic device may perform an operation for acquiring an image corresponding to the third photographing command.

Hereinafter, an embodiment in which the electronic device switches to the standby state based on image frames being acquired will be described based on FIG. 6(b).

Referring to FIG. 6(b), the electronic device may acquire a first photographing command 711. The electronic device may acquire first image frames for acquiring a first image corresponding to the first photographing command 711 in response to the first photographing command 711. According to an embodiment, the electronic device may transmit a photographing start signal 713 based on acquisition of the first image frames for acquiring the first image. For example, the electronic device may transmit the photographing start signal 713 based on the acquisition of the first image frames for acquiring the first image being completed (712). For example, the electronic device may transmit the photographing start signal 713 to an application. In an example, the photographing start signal 713 may include an audio signal. However, this should not be considered as limiting. In an example, the photographing start signal 713 may be omitted.

According to an embodiment, the electronic device may perform image processing with respect to the first image frames, based on the first image frames for acquiring the first image being acquired. For example, the electronic device may perform image processing with respect to the first image frames in response to the acquisition of the first image frames for acquiring the first image being completed (712). For example, the electronic device may synthesize at least some of the first image frames for acquiring the first image.

According to an embodiment, the electronic device may switch to a standby state to be able to acquire a second image corresponding to a next photographing command (for example, a second photographing command 721) following the first photographing command, based on the first image frames being acquired. For example, the electronic device may transmit a control signal 710 to switch to the standby state to able to acquire the second image. For example, the electronic device may transmit the control signal 710 from the hardware abstraction layer to the framework. The electronic device may transmit the control signal 710 from the framework to the application layer. In an example, the electronic device may transmit the control signal 710 in response to the acquisition of the first image frames being completed (712). In an example, the electronic device may transmit the control signal 710 in response to the photographing start signal 713 related to the first photographing command being transmitted.

According to an embodiment, the electronic device may transmit an image processing completion signal 715 based on the image processing for the first image frames being completed. For example, the electronic device may transmit the image processing completion signal 715 based on the image synthesis for the first image frames being completed (714). For example, the electronic device may transmit the image processing completion signal 715 from the hardware abstraction layer to the framework. The framework may transmit an image acquisition completion signal to the application layer.

According to an embodiment, the electronic device may acquire a next photographing command (for example, the second photographing command 721) following the first photographing command in the standby state. According to an embodiment, the second photographing command 721 may be acquired between a first point of time at which the first image frames are acquired and a second point of time at which the image processing for the first image frames is completed. For example, referring to FIG. 6(b), the second photographing command 721 may be acquired between a point of time at which the acquisition of the first image frames is completed (712) and a point of time at which the image acquisition completion signal for the first image frames is transmitted to the application layer. According to an embodiment, the electronic device may perform an operation for acquiring a second image corresponding to the second photographing command 721 in response to the second photographing command 721 being acquired.

According to an embodiment, the electronic device may acquire second image frames for acquiring the second image corresponding to the second photographing command 721 in response to the second photographing command 721. In an example, the first image frames and the second image frames may include different image frames. However, this should not be considered as limiting. The first image frames and the second image frames may include at least one same image frame.

According to an embodiment, the electronic device may transmit a photographing start signal 723 which is based on the second photographing command 721, based on the second image frames for acquiring the second image being acquired. For example, the electronic device may transmit the photographing start signal 723, based on the acquisition of the second image frames for acquiring the second image being completed (722). For example, the electronic device may transmit the photographing start signal 723 to an application. In an example, the photographing start signal 723 may include an audio signal. However, this should not be considered as limiting. In an example, the photographing start signal 723 may be omitted.

According to an embodiment, the electronic device may perform image processing with respect to the second image frames, based on the second image frames for acquiring the second image being acquired. For example, the electronic device may perform image processing with respect to the second image frames in response to the acquisition of the second image frames for acquiring the second image being completed (722). For example, the electronic device may synthesize at least some of the second image frames for acquiring the second image.

According to an embodiment, the electronic device may switch to a standby state to be able to acquire a third image corresponding to a next photographing command (for example, a third photographing command 731) following the second photographing command, based on the second image frames being acquired. For example, the electronic device may transmit a control signal 720 to switch to the standby state to able to acquire the third image. For example, the electronic device may transmit the control signal 720 from the hardware abstraction layer to the framework. The electronic device may transmit the control signal 720 from the framework to the application layer. In an example, the electronic device may transmit the control signal 720 in response to the acquisition of the second image frames being completed (722). In an example, the electronic device may transmit the control signal 720 in response to a photographing start signal 723 related to the second photographing command being transmitted.

According to an embodiment, the electronic device may transmit an image processing completion signal based on the image processing for the second image frames being completed. For example, the electronic device may transmit the image processing completion signal based on the image synthesis for the second image frames being completed. For example, the electronic device may transmit the image processing completion signal from the hardware abstraction layer to the framework. The framework may transmit an image acquisition completion signal to the application layer.

According to an embodiment, the electronic device may acquire a next photographing command (for example, the third photographing command 731) following the second photographing command in the standby state. According to an embodiment, the third photographing command 731 may be acquired between a point of time at which the second image frames are acquired and a point of time at which the image processing for the second image frames is completed. For example, referring to FIG. 6(b), the third photographing command 731 may be acquired between a point of time at which the acquisition of the second image frames is completed (722) and a point of time at which the image acquisition completion signal for the second image frames is transmitted to the application layer. According to an embodiment, the electronic device may perform an operation for acquiring a third image corresponding to the third photographing command 731 in response to the third photographing command 731 being acquired.

According to an embodiment, comparing FIGS. 6(a) and 6(b), the time elapsed between a point of time at which a photographing command is acquired and a point of time at which a subsequent next photographing command is acquired may vary. For example, when the electronic device switches to the standby state to be able to acquire an image corresponding to a subsequent photographing command, the time elapsed between a point of time at which a photographing command is acquired and a point of time at which a subsequent next photographing command is acquired may be reduced. For example, referring to FIG. 6(a), when the electronic device does not switch to the standby state to be able to acquire an image corresponding to a subsequent photographing command, the time elapsed between a point of time at which a photographing command is acquired and a point of time at which a next photographing command is acquired may include the time elapsed between the point of time at which the first photographing command 611 is acquired and the point of time at which the third photographing command 631 is acquired. Referring to FIG. 6(b), when the electronic device switches to the standby state to be able to acquire an image corresponding to a subsequent photographing command, the time elapsed between a point of time at which a photographing command is acquired and a point of time at which a subsequent next photographing command is acquired may include the time elapsed between the point of time at which the first photographing command 711 is acquired and the point of time at which the second photographing command 721 is acquired. Accordingly, when the electronic device switches to the standby state to be able to acquire an image corresponding to a subsequent photographing command, an operation for the next photographing command may be performed a first time 730 faster than when the electronic device does not switch to the standby state to be able to acquire an image corresponding to a subsequent photographing command. Accordingly, the time required to perform the operation for the next photographing command may be reduced. Accordingly, when the electronic device switches to the standby state to be able to acquire an image corresponding to a subsequent photographing command, the user may acquire the image corresponding to the photographing command more swiftly.

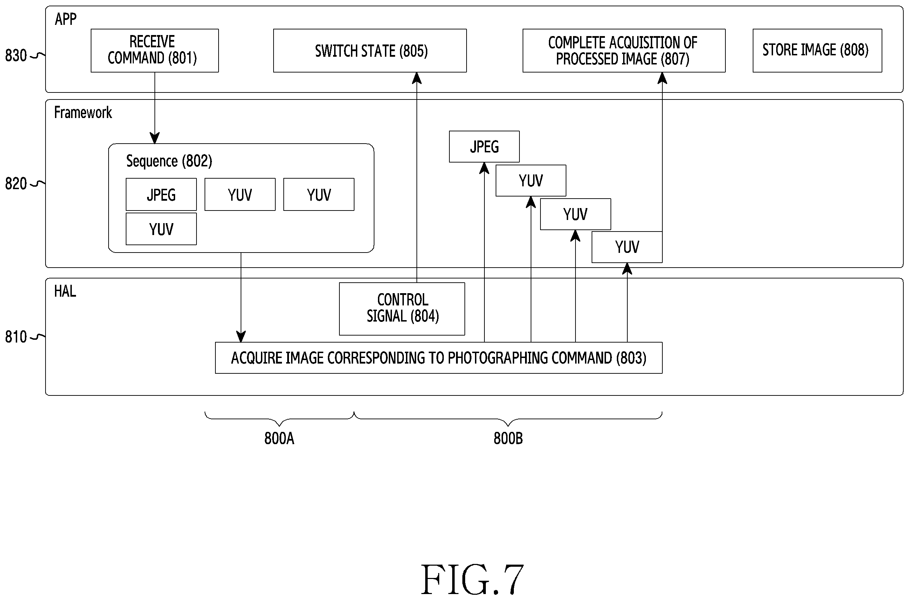

FIG. 7 is a concept view to explain an operation of acquiring an image in response to a photographing command, and an operation of switching to a standby state for a next photographing command.

Regarding the contents of FIG. 7, references may be made to the contents of at least one of the other drawings.

According to an embodiment, an application layer 830 may store various applications in memory (for example, the memory 130 of FIG. 1). For example, the applications may include a home, a camera, a dialer, an SMS/MMS, an instant message (IM), a notification, a voice dial, an email, a calendar and/or a media player. According to an embodiment, the applications may include an application for performing an operation related to camera capturing.

According to an embodiment, a framework 820 may include a module for providing various functions of an electronic device. For example, the framework 820 may provide a function that an application requires or may provide various functions enabling an application to use system resources in the electronic device.

According to an embodiment, the electronic device may acquire a command through the application layer 830 (801). For example, the electronic device may acquire a photographing command through the application layer 830. The electronic device may determine an image corresponding to a photographing command in the framework 820 in response to the photographing command being acquired through the application layer 830. For example, the electronic device may determine information on the image corresponding to the photographing command in the framework 820. For example, the electronic device may determine at least one of information on a photographing environment or information on image frames needed to acquire the image corresponding to the photographing command in the framework 820.

According to an embodiment, based on a result of determining, the electronic device may perform an operation for acquiring the image corresponding to the photographing command (803) in a hardware abstraction layer 810. For example, the electronic device may perform an operation 800A for acquiring image frames for acquiring the image and an operation 800B for performing image processing for at least some of the acquired image frames in the hardware abstraction layer 810.

According to an embodiment, based on the result of determining, the electronic device may acquire image frames for acquiring the image corresponding to the photographing command in the hardware abstraction layer 810. For example, the electronic device may acquire image frames corresponding to at least one of the information on the photographing environment or the information on the image frames needed to acquire the image corresponding to the photographing command.

According to an embodiment, the electronic device may switch to a standby state to be able to acquire an image corresponding to a subsequent next photographing command, based on the image frames being acquired. For example, the electronic device may transmit a control signal 804 to switch to the standby state, in response to the acquisition of the image frames being completed. For example, the electronic device may transmit the control signal 804 after the operation 800A of acquiring the image frames is completed.

According to an embodiment, the electronic device may transmit the control signal 804 from the hardware abstraction layer 810 to the framework 820. The electronic device may transmit the control signal 804 from the framework 820 to the application layer 830. In an example, the hardware abstraction layer 810 may transmit the control signal 804 to the application layer 830.

According to an embodiment, the electronic device may switch from the state of the electronic device (for example, the camera device) to the standby state (805) in response to the control signal 804. For example, the electronic device may switch to the standby state 805 in response to the application layer 830 receiving the control signal 804. When the electronic device acquires a subsequent next photographing command in the standby state, the electronic device may perform an operation for acquiring an image corresponding to the next photographing command. For example, the electronic device may perform an operation of acquiring image frames for acquiring the image corresponding to the next photographing command (refer to operation 800A), and an operation of performing image processing with respect to at least some of the acquired image frames (refer to operation 800B). When the electronic device acquires a subsequent photographing command in the standby state switched based on a previous photographing command, the electronic device may perform the repeated operations as described above.

According to an embodiment, the electronic device may perform the image processing operation 800B with respect to the acquired image frames. For example, the electronic device may perform image processing with respect to image frames acquired in the hardware abstraction layer 810. For example, the electronic device may synthesize the image frames. According to an embodiment, the electronic device may transmit an image which is based on the image frames for which image processing has been performed. For example, the electronic device may transmit the image from the hardware abstraction layer 810 to the framework 820. The electronic device may transmit the image from the framework 820 to the application layer 830. However, this should not be considered as limiting. For example, the electronic device may perform image processing with respect to the image received from the hardware abstraction layer 810 in the framework 820. The electronic device may transmit the image processed in the framework 820 from the framework 820 to the application layer 830.

According to an embodiment, the electronic device may acquire the image corresponding to the photographing command in response to determining that the image acquisition is completed. For example, the electronic device may determine whether the image acquisition is completed (807) in the application layer 830. For example, the electronic device may acquire the image corresponding to the photographing command in response to determining that the image acquisition is completed (807) in the application layer 830. The electronic device may output the image corresponding to the photographing command through a display. The electronic device may store the acquired image in response to the image corresponding to the photographing command being acquired (808). For example, the electronic device may store the image corresponding to the photographing command in memory.

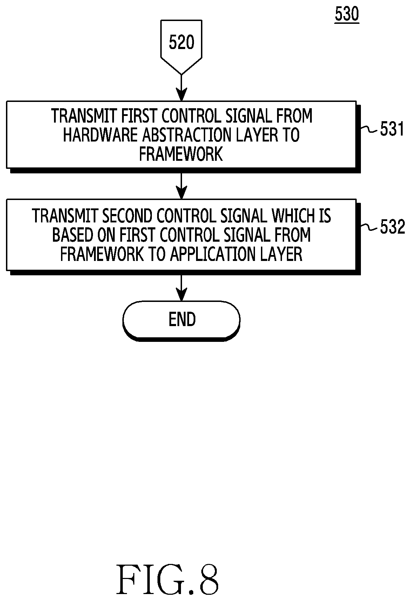

FIG. 8 is a flowchart illustrating a processor related to an example of an operation of switching to a standby state according to an embodiment.

Regarding the contents of FIG. 8, references may be made to the contents of at least one of the other drawings. For example, operation 531 may be subsequent to operation 520 of FIG. 5.

According to an embodiment, in operation 531, the electronic device may transmit a control signal for switching to the standby state, based on the image frames for acquiring the image corresponding to the first photographing command being acquired. For example, the electronic device may transmit a first control signal for switching to the standby state from the hardware abstraction layer to the framework.

According to an embodiment, in operation 532, the electronic device may transmit a control signal to the application layer in response to the first control signal being transmitted. For example, the electronic device may transmit a second control signal which is based on the first control signal from the framework to the application layer. The electronic device may switch to the standby state based on the control signal being transmitted. For example, the electronic device may switch to the standby state, based on the control signal for converting into the standby state being transmitted from the hardware abstraction layer to at least one of the framework or application layer. For example, the electronic device may switch to the standby state in response to the first control signal being transmitted from the hardware abstraction layer to the framework and the second control signal being transmitted from the framework to the application layer.

According to an embodiment, when the second photographing command is acquired after operation 532, the electronic device may perform an operation for acquiring an image corresponding to the second photographing command. For example, when the second photographing command is acquired between the first point of time at which the image frames for acquiring the image corresponding to the first photographing command are acquired, and the second point of time at which the image processing for the image frames is completed, the electronic device may perform the operation for acquiring the image corresponding to the second photographing command. However, this should not be considered as limiting. For example, when the second photographing command is acquired after the first point of time at which the image frames for acquiring the image corresponding to the first photographing command are acquired, the electronic device may perform the operation for acquiring the image corresponding to the second photographing command.

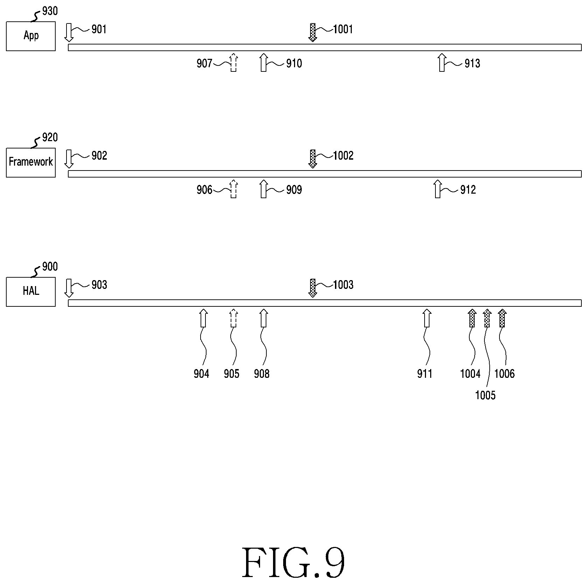

FIG. 9 is a view to explain a case in which a control signal for switching to a standby state is included in a signal related to completion of image processing for image frames according to an embodiment.

For the contents of FIG. 9, references may be made to the contents of at least one of the other drawings.

According to an embodiment, an electronic device may receive a photographing command 901 (for example, a first photographing command). For example, the electronic device may acquire the photographing command 901 through an application layer 930. The electronic device may transmit a first signal 902 related to the photographing command 901 from the application layer 930 to a framework 920. The electronic device may transmit a second signal 903 which is based on the first signal 902 from the framework 920 to a hardware abstraction layer 900.

According to an embodiment, in response to the hardware abstraction layer 900 receiving the signal (for example, the second signal 903) related to the photographing command 901, the electronic device may determine whether it is in a state to be able to perform an operation for acquiring an image corresponding to the photographing command 901. For example, the electronic device may determine whether a current state is a standby state in which it is able to perform the operation for acquiring the image corresponding to the photographing command 901.

According to an embodiment, in response to it being determined that the electronic device is in the state to be able to perform the operation for acquiring the image corresponding to the photographing command 901, the electronic device may acquire image frames for acquiring the image corresponding to the photographing command 901.

According to an embodiment, the electronic device may transmit a photographing start signal 905 in response to the photographing command 901 being acquired. In an example, in response to it being determined that the electronic device is in the state to be able to perform the operation for acquiring the image corresponding to the photographing command 901, the electronic device may transmit the photographing start signal 905. In an example, in response to the image frames for acquiring the image corresponding to the photographing command 901 being acquired, the electronic device may transmit the photographing start signal 905. For example, in response to the acquisition of the image frames for acquiring the image corresponding to the photographing command 901 being completed (904), the electronic device may transmit the photographing start signal 905. For example, referring to FIG. 9, in response to the photographing command 901 being acquired, the electronic device may transmit a first photographing start signal 906 from the hardware abstraction layer 900 to the framework 920. The electronic device may transmit a second photographing start signal 907 which is based on the first photographing start signal 906 from the framework 920 to the application layer 930.

According to an embodiment, the photographing start signal 905 may include an audio signal. For example, at least one of the first photographing start signal 906 or the second photographing start signal 907 may include an audio signal. For example, the photographing start signal 905 may include an audio signal informing a user of the start of photographing. However, this should not be considered as limiting.

According to an embodiment, based on the image frames being acquired, the electronic device may switch to the standby state to be able to acquire an image corresponding to a subsequent next photographing command 1001 (for example, a second photographing command). For example, based on the acquisition of the image frames being completed (904), the electronic device may switch to the standby state. For example, the electronic device may transmit a control signal 908 for switching to the standby state to be able to acquire the image corresponding to the next photographing command 1001. For example, based on the image frames being acquired, the electronic device may transmit a first control signal 909 for switching to the standby state to be able to acquire the image corresponding to the next photographing command 1001 from the hardware abstraction layer 900 to the framework 920. The electronic device may transmit a second control signal 910 which is based on the first control signal 909 from the framework 920 to the application layer 930. According to an embodiment, in response to the application layer 930 receiving the second control signal 910, the electronic device may switch to the standby state.

In an example, in response to the acquisition of the image frames being completed (904), the electronic device may switch to the standby state to be able to acquire the image corresponding to the subsequent next photographing command 1001 (for example, the second photographing command). For example, in response to the acquisition of the image frames being completed (904), the electronic device may transmit the control signal 908 for switching to the standby state to be able to acquire the image corresponding to the next photographing command 1001.

According to an embodiment, the electronic device may acquire the next photographing command 1001 following the photographing command 901. For example, the electronic device may acquire the next photographing command 1001 in the standby state. For example, the electronic device may acquire the next photographing command 1001 through the application layer 930. The electronic device may transmit a third signal 1002 related to the next photographing command 1001 from the application layer 930 to the framework 920. The electronic device may transmit a fourth signal 1003 which is based on the third signal 1002 from the framework 920 to the hardware abstraction layer 900.

According to an embodiment, in response to the hardware abstraction layer 900 receiving a signal (for example, the fourth signal 1003) related to the next photographing command 1001, the electronic device may determine whether it is in the state to be able to perform the operation for acquiring the image corresponding to the next photographing command 1001. For example, the electronic device may determine whether the current state is the standby state in which it is able to perform the operation for acquiring the image corresponding to the next photographing command 1001. For example, the electronic device may determine whether the image frames for acquiring the image corresponding to the previous photographing command 901 have been acquired. For example, the electronic device may determine whether the acquisition of the image frames for acquiring the image corresponding to the previous photographing command 901 is completed (904).

According to an embodiment, in response to it being determined that the electronic device is in the state to be able to perform the operation for acquiring the image corresponding to the next photographing command 1001, the electronic device may acquire image frames for acquiring the image corresponding to the next photographing command 1001.

According to an embodiment, in response to the next photographing command 1001 being acquired, the electronic device may transmit a photographing start signal 1005. In an example, in response to it being determined that the electronic device is in the state to be able to perform the operation for acquiring the image corresponding to the next photographing command 1001, the electronic device may transmit the photographing start signal 1005. In an example, in response to the image frames for acquiring the image corresponding to the next photographing command 1001 being acquired, the electronic device may transmit the photographing start signal 1005. For example, in response to the acquisition of the image frames for acquiring the image corresponding to the next photographing command 1001 being completed (1004), the electronic device may transmit the photographing start signal 1005. For example, in response to the next photographing command 1001 being acquired, the electronic device may transmit a first photographing start signal related to the next photographing command 1001 from the hardware abstraction layer 900 to the framework 920. The electronic device may transmit a second photographing start signal which is based on the first photographing start signal related to the next photographing command 1001 from the framework 920 to the application layer 930.

According to an embodiment, the photographing start signal 1005 may include an audio signal. For example, at least one of the first photographing start signal or the second photographing start signal related to the next photographing command 1001 may include an audio signal. For example, the photographing start signal 1005 may include an audio signal informing a user of the start of photographing. However, this should not be considered as limiting.

According to an embodiment, based on the image frames for the next photographing command 1001 being acquired, the electronic device may switch to a standby state to be able to acquire an image corresponding to a subsequent next photographing command (for example, a third photographing command). For example, based on the acquisition of the image frames for the next photographing command 1001 being completed (1004), the electronic device may switch to the standby state. For example, the electronic device may transmit a control signal for switching to the standby state to be able to acquire the image corresponding to the subsequent next photographing command. The subsequent operations may be repeatedly performed with reference to the above descriptions.

According to an embodiment, in response to the image frames for acquiring the image corresponding to the first photographing command 901 being acquired, the electronic device may perform image processing. For example, the electronic device may perform image processing with respect to the image frames for acquiring the image corresponding to the first photographing command 901.

According to an embodiment, based on the image frames for acquiring the image corresponding to the first photographing command 901 being acquired, the electronic device may transmit an image processing completion signal 911. For example, when image processing of the image frames for acquiring the image corresponding to the first photographing command 901 is completed, the electronic device may transmit the image processing completion signal 911. For example, the electronic device may transmit an image processing completion signal 912 for the image frames for acquiring the image corresponding to the first photographing command 910 from the hardware abstraction layer 900 to the framework 920. The electronic device may transmit an image acquisition completion signal 913 which is based on the image processing completion signal 912 from the framework 920 to the application layer 930.

According to an embodiment, a point of time at which the acquisition of the image frames is completed (904) and a point of time at which image processing of the image frames is completed (for example, a point of time at which the image acquisition completion signal 913 is received) may have no substantially difference. For example, the point of time at which the acquisition of the image frames is completed (904) and the point of time at which the image processing for the image frames is completed may be substantially the same. According to an embodiment, when a difference between the point of time at which the acquisition of the image frames is completed (904) and the point of time at which the image processing of the image frames is completed is smaller than a designated time, the image processing completion signal 911 may include the control signal 908 for switching to the standby state. For example, the image acquisition completion signal 913 may include the second control signal 910 for switching to the standby state. For example, when it is determined that the difference between the point of time at which the acquisition of the image frames is completed (904) and the point of time at which the image processing of the image frames is completed is smaller than the designated time, the electronic device may transmit the image processing completion signal 911 including the control signal 908 for switching to the standby state. However, this should not be considered as limiting. For example, the electronic device may transmit the control signal for switching to the standby state and the image acquisition completion signal 913 in sequence based on the image processing completion signal 912.

As described above, an electronic device (for example, the electronic device 101 of FIG. 1) according to an embodiment may include: a camera device (for example, the camera device 280 of FIG. 2) including an image sensor (for example, the image sensor 230 of FIG. 2); one or more processors (for example, the processor 120 of FIG. 1); and memory (for example, the memory 130 of FIG. 1) configured to store one or more instructions. The one or more instructions may be individually or collectively executed by the one or more processors to cause the electronic device to acquire a first photographing command. The one or more instructions may be individually or collectively executed by the one or more processors to cause the electronic device to, in response to the first photographing command, acquire image frames for acquiring an image corresponding to the first photographing command from the image sensor. The one or more instructions may be individually or collectively executed by the one or more processors to cause the electronic device tom based on the image frames being acquired, switch to a standby state to be able to acquire an image corresponding to a second photographing command. The second photographing command being subsequent to the first photographing command.

According to an embodiment, the second photographing command may be acquired between a first point of time at which the image frames are acquired and a second point of time at which image processing for the image frames is completed.

According to an embodiment, a number of the image frames may be determined based on the first photographing command at a point of time at which the first photographing command is acquired. The first point of time may include a point of time at which the determined number of the image frames are acquired.

According to an embodiment, the one or more instructions may be individually or collectively executed by the one or more processors to cause the electronic device to, in response to the second photographing command being acquired in the standby state, acquire image frames for acquiring the image corresponding to the second photographing command from the image sensor. The one or more instructions may be individually or collectively executed by the one or more processors to cause the electronic device to, based on the image frames for acquiring the image corresponding to the second photographing command being acquired, switch to a standby state to be able to acquire an image corresponding to a third photographing command which is subsequent to the second photographing command.

According to an embodiment, the one or more instructions may be individually or collectively executed by the one or more processors to cause the electronic device to transmit a first control signal for switching to the standby state from a hardware abstraction layer to a framework, based on the image frames being acquired. The one or more instructions may be individually or collectively executed by the one or more processors to cause the electronic device to transmit a second control signal which is based on the first control signal from the framework to an application layer.

According to an embodiment, the one or more instructions may be individually or collectively executed by the one or more processors to cause the electronic device to, in response to the first photographing command being acquired, transmit a first photographing start signal from the hardware abstraction layer to the framework. The one or more instructions may be individually or collectively executed by the one or more processors to cause the electronic device to transmit a second photographing start signal which is based on the first photographing start signal from the framework to the application layer. The one or more instructions may be individually or collectively executed by the one or more processors to cause the electronic device to, in response to the first photographing start signal, switch to the standby state to be able to acquire the image corresponding to the second photographing command. At least one of the first photographing start signal or the second photographing start signal may include an audio signal.

According to an embodiment, the one or more instructions may be individually or collectively executed by the one or more processors to cause the electronic device to, based on the image frames being acquired, transmit an image processing completion signal for the image frames from a hardware abstraction layer to a framework. The one or more instructions may be individually or collectively executed by the one or more processors to cause the electronic device to transmit an image acquisition completion signal which is based on the image processing completion signal from the framework to an application layer. The image acquisition completion signal may include a control signal for switching to the standby state.

According to an embodiment, as the camera device is activated, the image frames may be determined from a plurality of image frames acquired from the image sensor based on the first photographing command.

As described above, an operation method of an electronic device (for example, the electronic device 101 of FIG. 1) according to an embodiment may include acquiring a first photographing command. The operation method of the electronic device may include, in response to the first photographing command, acquiring image frames for acquiring an image corresponding to the first photographing command from an image sensor. The operation method of the electronic device may include, based on the image frames being acquired, switching to a standby state to be able to acquire an image corresponding to a second photographing command which is subsequent to the first photographing command.

According to an embodiment, the second photographing command may be acquired between a first point of time at which the image frames are acquired and a second point of time at which image processing for the image frames is completed.

According to an embodiment, a number of the image frames may be determined based on the first photographing command at a point of time at which the first photographing command is acquired. The first point of time may include a point of time at which the determined number of the image frames are acquired.

According to an embodiment, the operation method of the electronic device may include, in response to the second photographing command being acquired in the standby state, acquiring image frames for acquiring the image corresponding to the second photographing command from the image sensor. The operation method of the electronic device may include, based on the image frames for acquiring the image corresponding to the second photographing command being acquired, switching to a standby state to be able to acquire an image corresponding to a third photographing command which is subsequent to the second photographing command.

According to an embodiment, switching to the standby state may include transmitting a first control signal for switching to the standby state from a hardware abstraction layer to a framework, based on the image frames being acquired. Switching to the standby state may include transmitting a second control signal which is based on the first control signal from the framework to an application layer.

According to an embodiment, the operation method of the electronic device may include, based on the image frames being acquired, transmitting an image processing completion signal for the image frames from a hardware abstraction layer to a framework. The operation method of the electronic device may include transmitting an image acquisition completion signal which is based on the image processing completion signal from the framework to an application layer. The image acquisition completion signal may include a control signal for switching to the standby state.

According to an embodiment, as the camera device including the image sensor is activated, the image frames may be determined from a plurality of image frames acquired from the image sensor based on the first photographing command.

As described above, a computer-readable non-transitory recording medium according to an embodiment may have a computer program recorded thereon to cause an electronic device to, when being executed by the electronic device, acquire a first photographing command. The computer-readable non-transitory recording medium may have the computer program recorded thereon to cause the electronic device to, when being executed by the electronic device, in response to the first photographing command, acquire image frames for acquiring an image corresponding to the first photographing command from an image sensor. The computer-readable non-transitory recording medium may have the computer program recorded thereon to cause the electronic device to, when being executed by the electronic device, based on the image frames being acquired, switch to a standby state to be able to acquire an image corresponding to a second photographing command which is subsequent to the first photographing command.

According to an embodiment, the second photographing command may be acquired between a first point of time at which the image frames are acquired and a second point of time at which image processing for the image frames is completed.

According to an embodiment, a number of the image frames may be determined based on the first photographing command at a point of time at which the first photographing command is acquired. The first point of time may include a point of time at which the determined number of the image frames are acquired.

According to an embodiment, the computer-readable non-transitory recording medium may cause the electronic device to, when being executed by the electronic device, in response to the second photographing command being acquired in the standby state, acquire image frames for acquiring the image corresponding to the second photographing command from the image sensor. The computer-readable non-transitory recording medium may cause the electronic device to, when being executed by the electronic device, based on the image frames for acquiring the image corresponding to the second photographing command being acquired, switch to a standby state to be able to acquire an image corresponding to a third photographing command which is subsequent to the second photographing command.

According to an embodiment, the computer-readable non-transitory recording medium may cause the electronic device to, when being executed by the electronic device, based on the image frames being acquired, transmit an image processing completion signal for the image frames from a hardware abstraction layer (HAL) to a framework. The computer-readable non-transitory recording medium may cause the electronic device to, when being executed by the electronic device, transmit an image acquisition completion signal which is based on the image processing completion signal from the framework to an application layer. The image acquisition completion signal may include a control signal for switching to the standby state.

Methods based on the claims or the embodiments described in the disclosure may be implemented in hardware, software, or a combination of both.

When implemented in software, a computer readable storage medium for storing one or more programs (software modules) may be provided. The one or more programs stored in the computer readable storage medium are configured for execution performed by one or more processors in an electronic device. The one or more programs include instructions for causing the electronic device to execute the methods according to the claims of the disclosure and the embodiments described in the disclosure.

In the disclosure, the function or the operation that the electronic device performs may be performed by one or more processors executing one or more instructions stored in memory. The function or operation of the electronic device mentioned in the disclosure may be performed by one processor executing one or more instructions, or may be performed by a combination of a plurality of processors executing one or more instructions. It may be understood that the processor mentioned in the disclosure includes a circuit for performing computation or controlling other components of the electronic device. For example, the one or more processors may include a central processing unit (CPU), a microprocessor unit (MPU), an application processor (AP), a communication processor (CP), a neural processing unit (NPU), a system on chip (SoC), or an integrated circuit (IC) which is configured to execute one or more instructions. The one or more processors may be configured to perform the operations of the electronic device described above.

In the disclosure, the program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs) or other forms of optical storage devices, and a magnetic cassette. Alternatively, the program may be stored in memory configured in combination of all or some of these storage media. In addition, the memory may be configured as a single storage medium or a combination of a plurality of storage media. The one or more instructions may be stored in a single storage medium or may be distributed and stored in a plurality of storage media.

Further, the program may be stored in an attachable storage device capable of accessing the electronic device through a communication network such as the Internet, an Intranet, a local area network (LAN), a wide LAN (WLAN), or a storage area network (SAN) or a communication network configured by combining these networks. The storage device may access via an external port to a device which performs the embodiments of the disclosure. In addition, an additional storage device on a communication network may access to a device which performs the embodiments of the disclosure.

In the above-described specific embodiments of the disclosure, elements included in the disclosure are expressed in singular or plural forms according to specific embodiments. However, singular or plural forms are appropriately selected according to presented situations for the convenience of explanation, and the disclosure is not limited to a single element or plural elements. An element which is expressed in a plural form may be configured in a singular form or an element which is expressed in a singular form may be configured in plural number.

The term "unit" or "module" used in the disclosure refer to a hardware component such as a processor or a circuit, and/or a software component executed by a hardware component such as a processor.

A "unit", "module" may be implemented by a program that is stored in a storage medium which may be addressed, and is executed by a processor. For example, a "unit", "module" may be implemented by components such as software components, object-oriented software components, class components, and task components, processes, functions, attributes, procedures, sub-routines, segments of a program code, drivers, firmware, a micro code, a circuit, data, a database, data structures, tables, arrays and parameters.

Specific execution explained in the disclosure is merely an example, and the scope of the disclosure is not limited by any method. For the sake of clarity of the specification, descriptions of related-art electronic components, control systems, software, and other functional aspects of the systems may be omitted.

In the disclosure, such phrase as "including at least one of a, b, or c" may refer to "including only a", "including only b", "including only c", "including a combination of two or more components (including a and b, including b and c, including a and c, including all of a, b, c)".

While specific embodiments have been described in the detailed descriptions of the disclosure, it will be understood by those skilled in the art that various changes in form and details may be made therein without departing from the spirit and scope of the disclosure. Therefore, the scope of the disclosure is defined not by explained embodiments but by the appended claims and equivalents to the claims.

## Claims

1. An electronic device comprising:
a camera device including an image sensor;
one or more processors; and
memory configured to store one or more instructions,
wherein the one or more instructions are individually or collectively executed by the one or more processors to cause the electronic device to:
acquire a first photographing command;
in response to the first photographing command, acquire image frames for acquiring an image corresponding to the first photographing command from the image sensor; and
based on the image frames being acquired, switch to a standby state to be able to acquire an image corresponding to a second photographing command, the second photographing command being subsequent to the first photographing command.

2. The electronic device of claim 1, wherein the second photographing command is acquired between a first point of time at which the image frames are acquired and a second point of time at which image processing for the image frames is completed.

3. The electronic device of claim 2, wherein a number of the image frames are determined based on the first photographing command at a point of time at which the first photographing command is acquired, and
wherein the first point of time comprises a point of time at which the determined number of the image frames are acquired.

4. The electronic device of claim 1, wherein the one or more instructions are individually or collectively executed by the one or more processors to cause the electronic device to:
in response to the second photographing command being acquired in the standby state, acquire image frames for acquiring the image corresponding to the second photographing command from the image sensor; and,
based on the image frames for acquiring the image corresponding to the second photographing command being acquired, switch to a standby state to be able to acquire an image corresponding to a third photographing command which is subsequent to the second photographing command.

5. The electronic device of claim 1, wherein the one or more instructions are individually or collectively executed by the one or more processors to cause the electronic device to:
transmit a first control signal for switching to the standby state from a hardware abstraction layer (HAL) to a framework, based on the image frames being acquired; and
transmit a second control signal which is based on the first control signal from the framework to an application layer.

6. The electronic device of claim 5, wherein the one or more instructions are individually or collectively executed by the one or more processors to cause the electronic device to:
in response to the first photographing command being acquired, transmit a first photographing start signal from the hardware abstraction layer to the framework;
transmit a second photographing start signal which is based on the first photographing start signal from the framework to the application layer; and
in response to the first photographing start signal, switch to the standby state to be able to acquire the image corresponding to the second photographing command,
wherein at least one of the first photographing start signal or the second photographing start signal comprises an audio signal.

7. The electronic device of claim 1, wherein the one or more instructions are individually or collectively executed by the one or more processors to cause the electronic device to:
based on the image frames being acquired, transmit an image processing completion signal for the image frames from a hardware abstraction layer (HAL) to a framework; and
transmit an image acquisition completion signal which is based on the image processing completion signal from the framework to an application layer, and
wherein the image acquisition completion signal comprises a control signal for switching to the standby state.

8. The electronic device of claim 1, wherein, as the camera device is activated, the image frames are determined from a plurality of image frames acquired from the image sensor based on the first photographing command.

9. An operation method of an electronic device, the method comprising:
acquiring a first photographing command;
in response to the first photographing command, acquiring image frames for acquiring an image corresponding to the first photographing command from an image sensor; and
based on the image frames being acquired, switching to a standby state to be able to acquire an image corresponding to a second photographing command which is subsequent to the first photographing command.

10. The method of claim 9, wherein the second photographing command is acquired between a first point of time at which the image frames are acquired and a second point of time at which image processing for the image frames is completed.

11. The method of claim 10, wherein a number of the image frames are determined based on the first photographing command at a point of time at which the first photographing command is acquired, and
wherein the first point of time comprises a point of time at which the determined number of the image frames are acquired.

12. The method of claim 9, further comprising:
in response to the second photographing command being acquired in the standby state, acquiring image frames for acquiring the image corresponding to the second photographing command from the image sensor; and,
based on the image frames for acquiring the image corresponding to the second photographing command being acquired, switching to a standby state to be able to acquire an image corresponding to a third photographing command which is subsequent to the second photographing command.

13. The method of claim 9, wherein switching to the standby state comprises:
transmitting a first control signal for switching to the standby state from a hardware abstraction layer (HAL) to a framework, based on the image frames being acquired; and
transmitting a second control signal which is based on the first control signal from the framework to an application layer.

14. The method of claim 9, further comprising:
based on the image frames being acquired, transmitting an image processing completion signal for the image frames from a hardware abstraction layer (HAL) to a framework; and
transmitting an image acquisition completion signal which is based on the image processing completion signal from the framework to an application layer,
wherein the image acquisition completion signal comprises a control signal for switching to the standby state.

15. A computer-readable non-transitory recording medium having a computer program recorded thereon to cause an electronic device to, when being executed by the electronic device:
acquire a first photographing command;
in response to the first photographing command, acquire image frames for acquiring an image corresponding to the first photographing command from an image sensor; and,
based on the image frames being acquired, switch to a standby state to be able to acquire an image corresponding to a second photographing command which is subsequent to the first photographing command.
